# EUROPEAN PATENT APPLICATION

(11) **EP 4 557 128 A1**
(43) Date of publication of application: **21.05.2025**
(21) Application number: 23839499.3
(22) Date of filing: 30.06.2023
(51) Int. Cl.: G06F 16/903, G06F 16/908, H04N 17/00, G06Q 30/0273

(54) **INFORMATION PROCESSING DEVICE, INFORMATION PROCESSING METHOD, AND INFORMATION PROCESSING PROGRAM**

(30) Priority: 13.07.2022 JP 2022112231
(71) Applicant: DENTSU INC., Tokyo 105-7001 (JP)
(72) Inventor: KISHIMOTO Wataru, Tokyo 105-7001 (JP); SUZUKI Mayuko, Tokyo 105-7077 (JP); ENDO Ken, Tokyo 105-7077 (JP); YONEDA Ko, Tokyo 105-7077 (JP)
(74) Representative: SSM Sandmair
(86) International application number: PCT/JP2023/024509
(87) International publication number: WO 2024/014327

(57) **Abstract**

Provided are an information processing apparatus, an information processing method, and an information processing program capable of extracting a related program to be used for rating point prediction of a target program with high accuracy. An information processing apparatus (30) according to one aspect of the present disclosure includes an acquisition unit (31), an extraction unit (32), and a prediction unit (33). The acquisition unit (31) acquires past programs that are candidates for a related program to be used for rating point prediction of the target program. The extraction unit (32) extracts the related program from among the past programs based on a broadcast station, a broadcast date and time, a program name, and a program content of the past program. The prediction unit (33) predicts a rating point of the target program by using the related program.

## Description

### Technical Field

The present disclosure relates to an information processing apparatus, an information processing method, and an information processing program.

### Background Art

For example, Patent Literature 1 describes an advertisement space optimization system that optimizes an advertisement space broadcasted on a broadcast medium. The advertisement space optimization system includes an advanced rating point prediction apparatus (SHARE). The advanced rating point prediction apparatus (SHARE) is configured to predict a target rating point with accuracy higher than predetermined accuracy and/or input rating point data measured by a third party institution in real time, and transmit predicted rating point data of the advertisement space and/or rating point data immediately before being broadcasted to a target actual optimization apparatus (TAOS).

### Citation List

### Patent Literature

Patent Literature 1: WO 2018/131576 A

### Summary of Invention

### Technical Problem

However, the related art including Patent Literature 1 has room for improvement from the viewpoint of extracting a related program to be used for rating point prediction of a target program with high accuracy.

Therefore, an object of the present disclosure is to provide an information processing apparatus, an information processing method, and an information processing program capable of extracting a related program to be used for rating point prediction of a target program with high accuracy.

### Solution to Problem

An information processing apparatus according to one aspect of the present disclosure includes: an acquisition unit configured to acquire past programs that are candidates for a related program to be used for rating point prediction of a target program; and an extraction unit configured to extract the related program from among the past programs based on a broadcast station, a broadcast date and time, a program name, and a program content of the past program.

### Advantageous Effects of Invention

According to one aspect of the present disclosure, it is possible to provide an information processing apparatus, an information processing method, and an information processing program capable of extracting a related program to be used for rating point prediction of a target program with high accuracy.

### Brief Description of Drawings

Fig. 1 is a diagram illustrating an example of a schematic configuration of a system including an information processing apparatus (rating point prediction apparatus).
Fig. 2 is a functional block diagram illustrating an example of an internal configuration of the information processing apparatus (rating point prediction apparatus).
Fig. 3 is a diagram illustrating an example of extraction of a related program based on an editing distance.
Fig. 4 is a diagram illustrating an example of extraction of a related program based on a broadcast station, a broadcast date, a start time, an end time, and a program name of a target program and a past program.
Fig. 5 is a diagram illustrating a first example of extraction of a related program based on BERT.
Fig. 6 is a diagram illustrating a second example of extraction of a related program based on BERT.
Fig. 7 is a diagram illustrating an example of a functional configuration of a cost calculation apparatus, a broadcasting distribution apparatus, and the information processing apparatus (rating point prediction apparatus).
Fig. 8 is a diagram illustrating an example of a hardware configuration of the cost calculation apparatus, the broadcasting distribution apparatus, and the information processing apparatus (rating point prediction apparatus).

### Description of Embodiments

For example, in television broadcasting, a commercial message (CM) is broadcasted as an advertisement. In a television CM, it is possible to give a viewer an impression about a product, a service, or the like by repeatedly transmitting a message by voice and video.

The television CM is usually distributed through media space transaction in which an advertising company sells to an advertiser a media space provided as an advertisement space by a television station which is a media company. The television CM is roughly divided into a time CM and a spot CM.

The time CM is a CM (CM broadcasted in a space that is bought and sold integrally with a program) broadcasted within a time of a program instead of an advertiser paying the program production cost or the like. The time CM may be referred to as a program commercial, a program CM, a provision CM, or the like.

The spot CM is a CM (CM broadcasted in a CM time space set by a television station) that is broadcasted mainly at a time between programs without providing programs. The spot CM is divided into a station break (SB) that is broadcasted between programs, a participation (PT) (or a participation CM) that is inserted into a program but does not include a provision display, and the like.

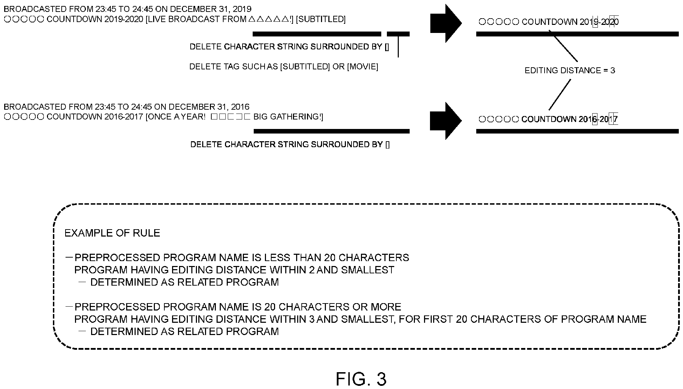

Here, cost calculation of the television CM is executed by a calculation formula including a rating point (predicted rating point) of a target program. For example, spot CM planning is performed in units of a gross rating point (GRP). The cost per GRP is called cost per rating. In general, the cost per rating is different for each publication pattern (for example, inverted L type, a whole day type, a figure 3 type, a backward C type, a bar type, a midnight type, an all-day daytime type, and the like). The spot CM fee in a case where a certain publication pattern is selected may be calculated based on GRP × cost per rating.

In addition, the predicted rating point of the target program is obtained by using a rating point of a related program (for example, broadcast before a previous time of a serial drama, broadcast before a previous time of a special program, and the like) related to the target program. Therefore, the present inventor has conceived an information processing apparatus (rating point prediction apparatus) having the following configuration in order to extract a related program to be used for rating point prediction of a target program with high accuracy.

That is, an information processing apparatus (rating point prediction apparatus) according to one aspect of the present disclosure includes: an acquisition unit configured to acquire past programs that are candidates for a related program to be used for rating point prediction of a target program; and an extraction unit configured to extract the related program from among the past programs based on a broadcast station, a broadcast date and time, a program name, and a program content of the past program.

Hereinafter, an embodiment of the present disclosure will be described in detail with reference to the accompanying drawings. In the following description, the same parts will be denoted by the same reference numerals. Since the same parts have the same names, functions, and the like, detailed descriptions thereof will not be repeated.

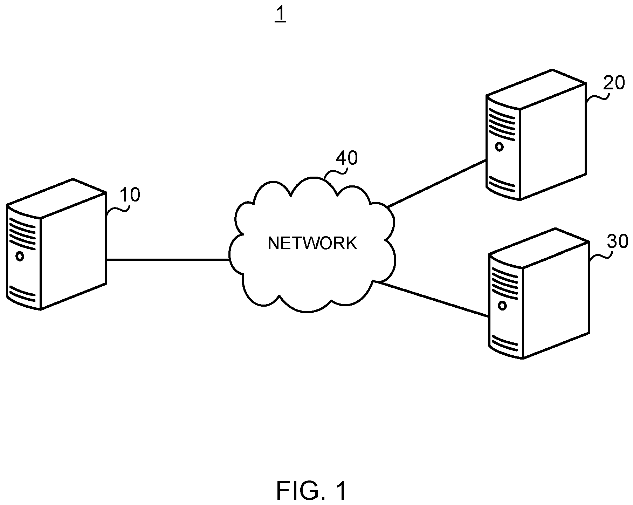

Fig. 1 is a diagram illustrating an example of a schematic configuration of a system including an information processing apparatus (rating point prediction apparatus) according to the embodiment. A system 1 includes a cost calculation apparatus 10, a broadcasting distribution apparatus 20, and an information processing apparatus (rating point prediction apparatus, rating point management apparatus) 30. The cost calculation apparatus 10, the broadcasting distribution apparatus 20, and the information processing apparatus 30 are communicably connected to each other via a network 40.

The cost calculation apparatus 10 calculates, for example, a cost of a television CM. The cost calculation apparatus 10 calculates the cost of the television CM based on a calculation formula including a rating point (predicted rating point) of a target program into which the television CM is inserted.

The cost calculation apparatus 10 acquires, for example, a cost for each publication pattern of a spot CM in a predetermined period (for example, one week) of a certain broadcast station (which may be replaced as a channel). Here, the cost in the present disclosure may mean cost per rating indicating a fee per GRP (1%) of the rating point. The publication pattern may include an existing (arbitrary) publication pattern (for example, inverted L type, a whole day type, a figure 3 type, a backward C type, a bar type, a midnight type, an all-day daytime type, and the like). In addition, the cost calculation apparatus 10 may acquire a cost for each publication pattern, a time zone configuring the publication pattern, and the like based on an input (for example, setting by the broadcast station) from the outside.

The cost calculation apparatus 10 may acquire (for example, receive) information for the cost calculation. For example, the cost calculation apparatus 10 may acquire (receive) rating point information (for example, a household rating point, an individual rating point, and an individual overall rating point that is a rating point (may be referred to as "All&P + C7 (Program + Commercial 7)" or the like) obtained by adding real-time viewing and time shift viewing up to the seventh day after broadcasting, and the like) regarding each advertisement space from the information processing apparatus 30. For example, the cost calculation apparatus 10 may derive the cost of one space for time A based on setting of a unit price of one space for time A by the broadcast station and the information of the rating point acquired from the information processing apparatus 30. Here, the "information of the rating point acquired from the information processing apparatus 30" may correspond to the "rating point (predicted rating point) of the target program into which the television CM is inserted".

The cost calculation apparatus 10 may be a mobile terminal (mobile communication terminal) such as a mobile phone, a smartphone, or a tablet terminal, or may be a fixed communication terminal such as a personal computer (PC) or a server. That is, the cost calculation apparatus 10 in the present disclosure can be replaced with a communication device. Furthermore, the cost calculation apparatus 10 may communicate with a network (such as the Internet) in a wired and/or wireless manner (for example, long term evolution (LTE), new radio (NR), Wi-Fi (registered trademark), or the like).

The broadcasting distribution apparatus 20 is an apparatus that distributes broadcasting to a television (TV). Here, the television (television receiver) may be an apparatus having a function of receiving at least one of terrestrial broadcasting, broadcasting by broadcasting satellite (BS)/communications satellite (CS), Internet broadcasting (Internet television), and the like. For example, the television may be a multi-function television, a smart TV, an Internet protocol (IP) TV, a set-top box, and the like. Note that broadcasting means transmission of electric communication intended to be directly received by the public, and may include wireless broadcast, Internet broadcast, and the like.

The information processing apparatus 30 is an apparatus that aggregates actual rating points of a program broadcasted on televisions. Furthermore, the information processing apparatus 30 is an apparatus that predicts a rating point of a program (target program) to be broadcasted on televisions. The rating point may be stored in a predetermined time unit (for example, seconds, minutes, and hours). The information processing apparatus 30 may transmit information regarding the rating point (for example, the rating point (predicted rating point) of the target program into which the television CM is inserted) to another apparatus (for example, the cost calculation apparatus 10) via the network.

The information processing apparatus 30 may be, for example, an apparatus managed by a television rating point researcher. The information processing apparatus 30 may acquire and manage data of a viewing history from a measuring device connected to a television of a predetermined household (for example, a research cooperation household). Note that the rating point may be calculated or predicted from the data. In the information processing apparatus 30, a rating point (individual rating point of a target) for each predetermined target (a user corresponding to a predetermined attribute) may be stored. In the present disclosure, the target is assumed to be gender/age classification (a C (Child) group, a T (Teen) group, an M (Male) 1-M3 group, and an F (Female) 1-F3 group) used in the field of marketing, but the present disclosure is not limited to such classification.

The information processing apparatus 30 is configured to be able to predict an "advertisement rating point of a viewer" of the television with high accuracy by using a new analysis method of handling big data. The information processing apparatus 30 can include a data input unit that inputs data source information, an explanatory variable conversion unit that applies specific processing to the data source information input from the data input unit to convert the data source information into an explanatory variable, a program implementation/execution unit that implements a program of a predetermined algorithm, and a data output unit that outputs a result by the program implementation/execution unit. It is possible to execute an algorithm of a program in which the program implementation/execution unit is implemented by using the data source information input from the data input unit and the explanatory variable obtained by the explanatory variable conversion by the explanatory variable conversion unit, output predicted rating point data obtained by executing the algorithm from the output unit, and optimize an advertisement space based on the output predicted rating point data. Here, a rating point of a related program (for example, broadcast before a previous time of a serial drama, broadcast before a previous time of a special program, and the like) related to the target program can be used as the data source information for calculating the rating point (predicted rating point) of the target program into which the television CM is inserted.

Note that the system configuration is an example, and the present disclosure is not limited thereto. For example, one apparatus is included for each type of the apparatus in Fig. 1, but the number of devices is not limited thereto, and a plurality of devices may be provided. The system 1 may be configured not to include some apparatuses, or may be configured such that a function of one apparatus is implemented by a plurality of apparatuses. Conversely, functions of the plurality of apparatuses may be implemented by one apparatus. For example, at least two of the cost calculation apparatus 10, the broadcasting distribution apparatus 20, and the information processing apparatus 30 may be implemented on one server.

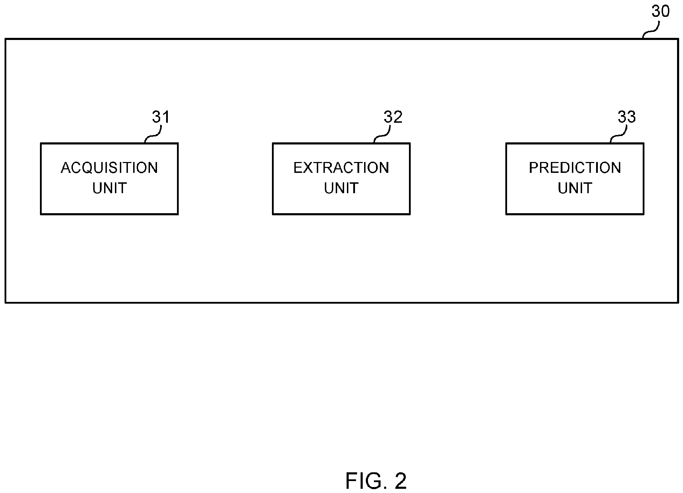

Fig. 2 is a functional block diagram illustrating an example of an internal configuration of the information processing apparatus (rating point prediction apparatus) 30. The information processing apparatus 30 includes an acquisition unit (processor, first processor) 31, an extraction unit (processor, second processor) 32, and a prediction unit (processor, third processor) 33. The information processing method and the information processing program of the present disclosure are implemented by causing a computer included in the information processing apparatus 30 (acquisition unit 31, extraction unit 32, and prediction unit 33) to execute predetermined processing steps.

The acquisition unit (processor, first processor) 31 acquires past programs that are candidates for the related program to be used for rating point prediction of the target program. The acquisition unit 31 can acquire all past programs that are candidates for the related program without setting time and content limitations.

The extraction unit (processor, second processor) 32 narrows down the past programs acquired by the acquisition unit 31 to programs broadcasted a predetermined period before a broadcast date and time of the target program, and extracts the programs. For example, in a case of obtaining a predicted rating point three days before the broadcast date of the target program, the extraction unit 32 narrows down the programs to the past programs broadcasted four days before the broadcast date of the target program. Note that, at the time of system implementation, all past programs that can be acquired at the time of prediction can be used. In addition, there is a degree of freedom for a period for obtaining the predicted rating point of the target program, and various design changes can be made. Furthermore, it is not necessary to narrow down the past programs according to the period for obtaining the predicted rating point of the target program.

The extraction unit 32 extracts a related program to be used for the rating point prediction of the target program from the past programs based on the broadcast station, the broadcast date and time, the program name, and the program content of the past program. The broadcast station, the broadcast date and time, the program name, and the program content of the past program can be obtained, for example, by video search from VR program information in which the program name, the broadcast duration, the broadcast start time, the broadcast date, the broadcast station name, and the like after the end of the OA are stored in a database. In addition, the broadcast station, the broadcast date and time, the program name, and the program content of the past program can be obtained, for example, from television metadata that is a database produced by Wire Action Co., Ltd., in which the content actually broadcasted, such as a company, a product, a store, music, or a performer introduced in the program, is recorded via a unique input interface after television broadcasting OA.

The television metadata may include electronic program guide (EPG) program information and an EPG pre-browsing count. The EPG program information is broadcast station official program information, and Interactive Program Guide Inc. (IPG) directly obtains program-related information from broadcast stations all over the country and centrally manages this data. Specifically, a program name, a broadcast date and time, a program summary, a program detail, a genre, a channel identification ID, a program identification ID, and the like are included. Further, when an EPG electronic program table is browsed on a home page on a personal computer or browsed on an application on a portable smartphone, the entire electronic program table (= a timetable) can be browsed at a first display stage, but details of the program content can be browsed by selecting (clicking or the like) an individual program column from the electronic program guide. The number obtained by aggregating how many times the detail page of each program is accessed before the program broadcast is the EPG pre-browsing number.

The extraction unit 32 extracts the related program from the past programs based on whether or not the broadcast station of the target program and the broadcast station of the past program are the same. For example, the extraction unit 32 extracts a program of the same broadcast station as the target program from among the past programs as the candidate for the related program. On the other hand, since there is a possibility that the related program is included in the past programs even when the broadcast station is different (for example, there is a case where a program whose broadcast station changes depending on times, such as professional baseball or Tokyo marathon, cannot be associated), even when the broadcast stations of the target program and the past program are different, the extraction unit 32 may leave the past program of which the broadcast station is different as the candidate for the related program. That is, the extraction unit 32 may not discard the candidate for the related program in the past programs only based on whether the broadcast stations of the target program and the past program are the same (whether the broadcast stations of the target program and the past program are the same may be used as an auxiliary reference).

The extraction unit 32 extracts the related program from among the past programs based on whether or not there is a predetermined common matter between the broadcast dates of the target program and the past program, and whether or not the start times, the end times, and the broadcast duration of the target program and the past program are the same or within a predetermined range.

For example, the extraction unit 32 recognizes that the broadcast dates of the target program and the past program are the same day of the week, or the broadcast dates of the target program and the past program are different from each other in the year but are the same day (for example, New Year's Day, New Year's Eve, or the like every year), as the predetermined common matter, and extracts, from among the past programs, a program having the predetermined common matter with the target program, as the candidate for the related program.

For example, in a case where at least one of the start time, the end time, and the broadcast duration of the target program and the past program is the same, the extraction unit 32 extracts, from among the past programs, a program in which at least one of the start time, the end time, and the broadcast duration is the same as the target program as the candidate for the related program. Alternatively, based on the start time, the end time, and the broadcast duration of the target program, the extraction unit 32 extracts, from among the past programs, a program within a predetermined range of the start time, the end time, and the broadcast duration of the target program as the candidate for the related program. For example, when the start time is used as a reference, a past program started within two hours before and after the start time of the target program may be extracted as the candidate for the related program. In addition, in a case where the end time is used as a reference, a past program that ends within two hours before and after the end time of the target program may be extracted as the candidate for the related program. In a case where the broadcast duration is used as a reference, a past program in which the broadcast duration falls within a predetermined relative value of the broadcast duration of the target program may be extracted as the candidate for the related program. For example, when the broadcast duration of the target program is 60 minutes and the predetermined relative value is 0.6 to 1.6, a past program in which the broadcast duration falls within 36 minutes to 96 minutes may be extracted as the candidate for the related program.

The extraction unit 32 extracts the related program from among the past programs based on whether or not an editing amount for making program names of the target program and the past program into a same character string exceeds a predetermined editing amount. The extraction unit 32 can extract the related program from among the past programs, by using an "editing distance" which is an index indicating how many times editing is necessary to convert an original character string into a character string to be compared.

Fig. 3 is a diagram illustrating an example of the extraction of the related program based on the editing distance. In the example of Fig. 3, broadcast of a program name "∘∘∘∘∘ countdown 2019-2020 [live broadcast from ΔΔΔΔΔ!] [subtitled]" broadcasted from 23:45 on December 31, 2019 to 0:45 on January 1, 2020 is compared with broadcast of a program name "∘∘∘∘∘ countdown 2016-2017 [once a year! 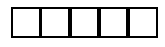 big gathering!" broadcasted from 23:45 on December 31, 2016 to 0:45 on January 1, 2017. As preprocessing, a character string surrounded by parentheses [] is deleted, and a tag such as [subtitled] or [movie] is deleted. By this preprocessing, the character string of "∘∘∘∘∘ countdown 2019-2020 [live broadcast from ΔΔΔΔΔ!] [subtitled]" is converted into "°°°°° countdown 2019-2020", and the character string of "∘∘∘∘∘ countdown 2016-2017 [once a year! 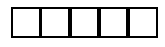 big gathering!" is converted into "∘∘∘∘∘ countdown 2016-2017". When the converted character strings are compared with each other, three characters of "201<9>-20<2><0>" in the anno Domini part of the former character string and "201<6>-20<1><7>" in the anno Domini part of the latter character string are different. Therefore, the editing distance between them is 3.

As an example of a rule of determining the related program based on the editing distance, the following is considered. When the preprocessed program name is less than 20 characters, a program having an editing distance within 2 and the smallest can be determined as the related program, and when the preprocessed program name is 20 characters or more, a program having an editing distance within 3 and the smallest for the first 20 characters of the program name can be determined as the related program. Since "∘∘∘∘∘ countdown 2019-2020" and "∘∘∘∘∘ countdown 2016-2017" in Fig. 3 are 21 characters, when it is determined based on the latter rule, the first 20 characters of the program name are determined to be in a relationship between the target program and the related program since the program has an editing distance of 3 or less and is the smallest. Of course, the rule of determining the related program based on the editing distance described here is merely an example, and various design changes can be made. In addition, for example, in a case where there is a [re] tag meaning rebroadcasting in the program name, the related program may be searched for in the past programs having the [re] tag, and in a case where there is no [re] tag in the program name, the related program may be searched for in the past programs having no [re] tag.

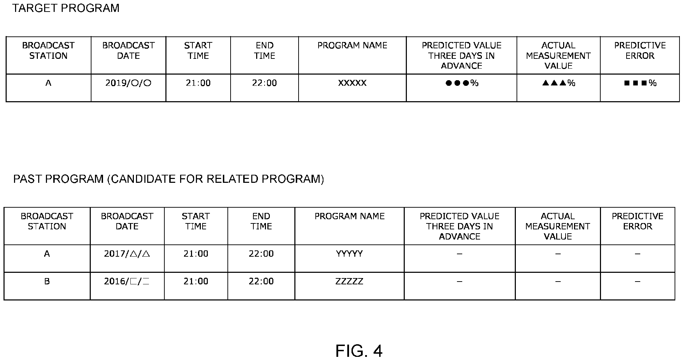

Fig. 4 is a diagram illustrating an example of the extraction of the related program based on the broadcast station, the broadcast date, the start time, the end time, and the program name of the target program and the past program.

Fig. 4 illustrates, as the target program, a program whose broadcast station is A, the broadcast date is ∘ month o day, 2019, the start time is 21:00, the end time is 22:00, and the program name is XXXXX. In addition, Fig. 4 illustrates, as the past programs that are candidates for the related program, a program in which the broadcast station is A, the broadcast date is Δ month Δ day, 2017, the start time is 21:00, the end time is 22:00, and the program name is YYYYY, and a program in which the broadcast station is B, the broadcast date is □ month □ day, 2016, the start time is 21:00, the end time is 22:00, and the program name is ZZZZZ.

The extraction unit 32 extracts a related program from among the past programs based on a degree of coincidence or relevance of the broadcast station, the broadcast date, the start time, the end time, and the program name of the target program and the past program. Since the related program extracted by the extraction unit 32 is optimized to predict a rating point of the target program with high accuracy, it is possible to extremely reduce a difference (▪▪▪%, a predictive error) between a predicted value (•••%, a predicted value three days in advance) of the rating point of the target program and an actual measurement value (▲▲▲%) of the rating point of the target program.

The extraction unit 32 vectorizes program names, program summaries, and program details of the target program and the past program by using bidirectional encoder representations from transformers (BERT), and extracts a related program from among the past programs based on cosine similarity between the vectorized target program and the past program. That is, the program name, the program summary, and the text of the program detail are analyzed in detail, and the related program is extracted from among the past programs based on the degree of coincidence and relevance of the appearing word and semantic content (vectorization of the sentence). BERT is excellent in natural language treatment tasks such as translation, document classification, and question response, incorporates an architecture (structure) called Transformer, and can realize "reading context" by learning sentences from both directions (beginning and end of sentence).

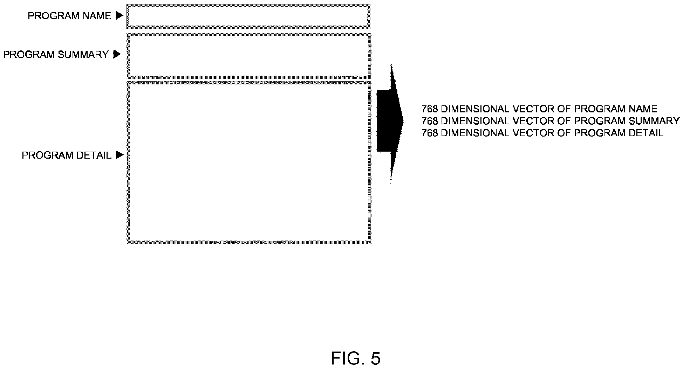

Fig. 5 is a diagram illustrating a first example of extraction of the related program based on BERT. As illustrated in Fig. 5, for each of the target program and the past program, the text of the program name (here, ooooo...) is converted into a 768 dimensional vector of the program name, the text of the program summary (here, ΔΔΔΔΔ...) is converted into a 768 dimensional vector of the program summary, and the text of the program detail (here, ...) is converted into a 768 dimensional vector of the program detail.

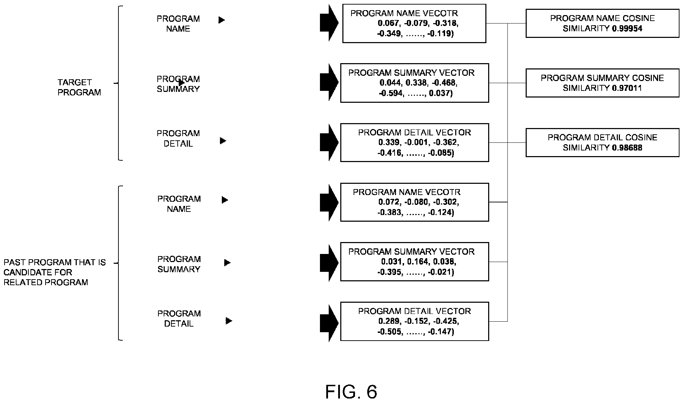

Fig. 6 is a diagram illustrating a second example of extraction of the related program based on BERT. In Fig. 6, a program name cosine similarity (here, 0.99954) between the vectorized data of the text (here, ∘∘∘∘∘...) of the program name of the target program and the vectorized data of the text (here, •••••...) of the program name of the past program that is a candidate for the related program is obtained. In addition, a program summary cosine similarity (here, 0.97011) between the vectorized data of the text (here, ΔΔΔΔΔ...) of the program summary of the target program and the vectorized data of the text (here, ▲▲▲▲▲...) of the program summary of the past program that is a candidate for the related program is obtained. In addition, a program detail cosine similarity (here, 0.98688) between the vectorized data of the text (here, 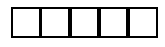 ...) of the program detail of the target program and the vectorized data of the text (here, ▪▪▪▪▪...) of the program detail of the past program that is a candidate for the related program is obtained. Note that Fig. 6 illustrates only one past program that is a candidate for the related program, but actually calculates cosine similarities of all the past programs (verification programs) narrowed down by, for example, the broadcast station, the start time, the end time, the broadcast duration, and the like. The cosine similarity means that the larger the value is, the higher the similarity to the target program is, and the smaller the value is, the lower the similarity to the target program is.

For each of the program name vector, the program summary vector, and the program detail vector, those having high cosine similarity to the target program are extracted from a group of past programs that are candidates of the related program, and ranking is calculated. Then, for example, the related program is extracted from the group of the past programs based on the following criteria.
(1) A past program ranked first in the cosine similarity to the target program and having cosine similarity of 0.99 or more is extracted as a related program. When cosine similarities of the program name vector, the program summary vector, and the program detail vector are different, the cosine similarity of the program name vector is prioritized.
(2) A threshold is set for each of the cosine similarity of the program name vector, the program summary vector, and the program detail vector. When there are two or more items whose cosine similarity does not exceed the threshold, the past program is not extracted as a related program. When there are two or more items whose cosine similarity exceeds the threshold, the past program is extracted as a related program. As an example, the cosine similarity threshold of the program name vector may be set to 0.97, the cosine similarity threshold of the program summary vector may be set to 0.98, and the cosine similarity threshold of the program detail vector may be set to 0.99. That is, the cosine similarity thresholds of the program name vector, the program summary vector, and the program detail vector can be made different.
(3) A past program whose ranking of total cosine similarity of the program name vector, the program summary vector, and the program detail vector is ranked first is extracted as a related program.

The prediction unit (processor, third processor) 33 predicts a rating point of the target program by using the related program extracted by the extraction unit 32. More specifically, the prediction unit 33 predicts the rating point of the target program by applying the rating point of the related program extracted by the extraction unit 32 to a predetermined calculation formula (algorithm). Examples of a parameter of the rating point of the related program extracted by the extraction unit 32 and to be used for the target program rating point prediction include a program broadcast space factor (rating point of program broadcast week, average rating point of previous four weeks, average rating point of previous four weeks in the back space, average rating point of previous four weeks in the front space, average rating point of previous four weeks in the front and back spaces, and a rating point of previous week, and the like). Examples of the parameter other than the rating point of the related program extracted by the extraction unit 32 and to be used for the target program rating point prediction include a program content factor (viewing feeling cluster, performer information, keyword category, topic category, information type, person weight maximum, person weight total, VR program category, EPG pre-browsing number by target, pre-browsing number by target of back program, and the like).

The calculation formula (algorithm) for predicting the rating point of the target program by the prediction unit 33 is not limited to a specific algorithm as long as "target output", that is, "predicted rating point with high accuracy" can be obtained, but for example, "random forest" can be used as the calculation formula (algorithm). The "random forest" is one of methods called "collective learning" in which learning is performed by aggregating a plurality of prediction results guided by a weak learning machine that performs learning with a simple model, and is a machine learning technique having "high prediction accuracy" and "readability of results". In the "random forest", a "decision tree" is used as an individual weak learning machine, and it can be said that the method solves the problem while taking advantage of the "decision tree". The decision tree is a prediction method in which a space is divided by a straight line orthogonal to an axis and a predicted value is assigned to each section. The decision tree is widely used for analysis of data with a simple distribution in which the reason for the prediction result is easily visualized because the space is linearly decomposed.

The rating point of the target program predicted by the prediction unit 33 is transmitted from the information processing apparatus 30 to the cost calculation apparatus 10 via the network 40. The cost calculation apparatus 10 calculates the cost of the television CM to be inserted into the target program based on the predicted rating point of the transmitted target program (for example, by multiplying by the cost per rating per GRP (1%)).

The example in which the information processing apparatus, the information processing method, and the information processing program described in the above embodiment are applied to the television CM has been described, but the present disclosure is not limited thereto. The above-described embodiment of the present disclosure may be applied to, for example, a radio CM, an Internet distribution CM, and the like. A person skilled in the art can replace and understand the description of the above embodiment as necessary. For example, when it is applied to the radio CM, the rating point of the present disclosure may be replaced with a listening rate.

The "GRP" of the present disclosure may be replaced with another index related to the gross rating point.

Note that the present disclosure also covers a content in which the "rating point" is replaced with a specific index (or a degree of improvement, an offset, and the like in a specific index). The specific index may be an index for determining an advertisement effect, an intermediate index for improving key performance indicators (KPIs) of an advertiser, or the like, and may include, for example, a recognition rate, reach, return on advertising spend (ROAS), return on investment (ROI), or the like. At least a part of the description "rating point" may be replaced with any of the above-described specific indices.

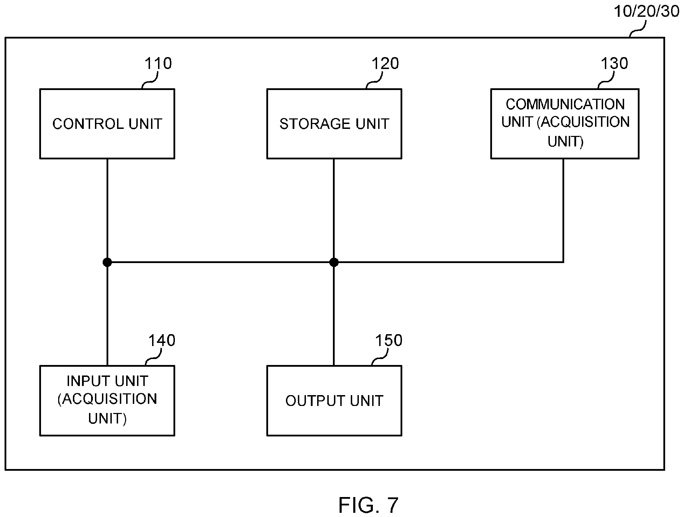

Fig. 7 is a diagram illustrating an example of a functional configuration of the cost calculation apparatus 10, the broadcasting distribution apparatus 20, and the information processing apparatus (rating point prediction apparatus) 30. As illustrated in Fig. 7, the cost calculation apparatus 10, the broadcasting distribution apparatus 20, and the information processing apparatus (rating point prediction apparatus) 30 include a control unit 110, a storage unit 120, a communication unit 130, an input unit 140, and an output unit 150. Note that Fig. 7 illustrates an example of functional blocks of the cost calculation apparatus 10, the broadcasting distribution apparatus 20, and the information processing apparatus (rating point prediction apparatus) 30, and may include other functional blocks not illustrated in Fig. 7. In addition, a configuration not including some functional blocks may be employed.

The control unit 110 performs control of the cost calculation apparatus 10, the broadcasting distribution apparatus 20, and the information processing apparatus (rating point prediction apparatus) 30. The control unit 110 can be configured with a controller, a control circuit, or a control apparatus described based on common recognition in the technical field according to the present invention.

The storage unit 120 stores information used by the cost calculation apparatus 10, the broadcasting distribution apparatus 20, and the information processing apparatus (rating point prediction apparatus) 30. The storage unit 120 can be configured with, for example, a memory, a storage, a storage apparatus, and the like described based on common recognition in the technical field according to the present invention.

The communication unit 130 performs communication between the cost calculation apparatus 10, the broadcasting distribution apparatus 20, and the information processing apparatus (rating point prediction apparatus) 30 (for example, mutual communication between them). The communication unit 130 can be configured with a transmitter/receiver, a transmission/reception circuit, or a transmission/reception apparatus described based on common recognition in the technical field according to the present invention. Note that the communication unit 130 may include a transmission unit and a reception unit.

The input unit 140 receives inputs in the cost calculation apparatus 10, the broadcasting distribution apparatus 20, and the information processing apparatus (rating point prediction apparatus) 30. Furthermore, the input unit 140 may be connected to a predetermined device, storage medium, or the like and may receive an input of data. The input unit 140 may output, for example, an input result to the control unit 110. The input unit 140 can be configured with an input apparatus such as a keyboard, a mouse, a button, or the like, an input/output terminal, an input/output circuit, and the like described based on common recognition in the technical field according to the present invention. Furthermore, the input unit 140 may have a configuration integrated with a display unit (for example, a touch panel).

The output unit 150 performs output in the cost calculation apparatus 10, the broadcasting distribution apparatus 20, and the information processing apparatus (rating point prediction apparatus) 30. For example, the output unit 150 may include a display unit that displays an image, a voice output unit that outputs a voice, and the like. The display unit can be configured with, for example, a display apparatus such as a display, a monitor, or the like described based on common recognition in the technical field according to the present invention. Furthermore, the voice output unit can be configured with an output apparatus such as a speaker or the like described based on common recognition in the technical field according to the present invention.

Note that the block diagrams used in the description of the above embodiment illustrate blocks in units of functions. These functional blocks (components) are implemented by any combination of hardware and/or software. In addition, means for implementing each functional block is not particularly limited. That is, each functional block may be implemented by one physically coupled apparatus, or may be implemented by a plurality of apparatuses in which two or more physically separated apparatuses are connected to each other in a wired or wireless manner.

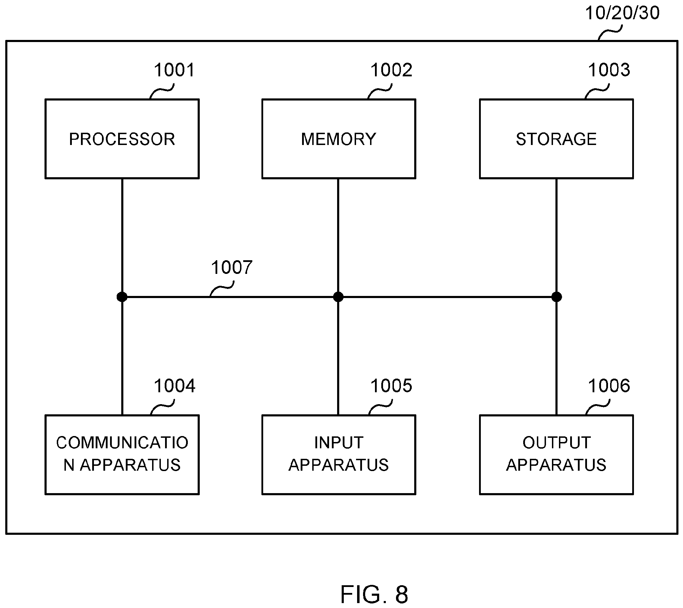

For example, the apparatus (cost calculation apparatus 10, broadcasting distribution apparatus 20, and information processing apparatus (rating point prediction apparatus) 30) according to the embodiment of the present disclosure may function as a computer that performs information processing (rating point prediction processing) of the present disclosure. Fig. 8 is a diagram illustrating an example of a hardware configuration of the cost calculation apparatus 10, the broadcasting distribution apparatus 20, and the information processing apparatus (rating point prediction apparatus) 30**.** The cost calculation apparatus 10, the broadcasting distribution apparatus 20, the information processing apparatus (rating point prediction apparatus) 30 described above may be physically configured as a computer apparatus including a processor 1001, a memory 1002, a storage 1003, a communication apparatus 1004, an input apparatus 1005, an output apparatus 1006, a bus 1007, and the like.

Note that, in the present disclosure, an apparatus, a circuit, a device, a unit, a server, and the like can be replaced with each other. The hardware configuration of the cost calculation apparatus 10, the broadcasting distribution apparatus 20, and the information processing apparatus (rating point prediction apparatus) 30 may be configured to include one or a plurality of apparatuses illustrated in the drawing, or may be configured without including some apparatuses.

For example, although only one processor 1001 is illustrated, there may be a plurality of processors. Furthermore, the processing may be executed by one processor, or various types of processing may be executed simultaneously, sequentially, or using other methods by two or more processors. Note that the processor 1001 may be implemented by one or more chips.

Each function in the cost calculation apparatus 10, the broadcasting distribution apparatus 20, and the information processing apparatus (rating point prediction apparatus) 30 is implemented by causing predetermined software (program) to be loaded on hardware such as the processor 1001 and the memory 1002, so that the processor 1001 performs an arithmetic operation, and controls communication by the communication apparatus 1004, reading and/or writing of data in the memory 1002 and the storage 1003, and the like.

The processor 1001 operates, for example, an operating system to control the entire computer. The processor 1001 may be configured with a central processing unit (CPU) including an interface with a peripheral apparatus, a control apparatus, an arithmetic apparatus, a register, and the like. Note that each unit such as the above-described control unit 110 may be implemented by the processor 1001.

In addition, the processor 1001 reads a program (a program code), a software module, data, and the like from at least one of the storage 1003 and the communication apparatus 1004 to the memory 1002, and executes various types of processing according to the data. As the program, a program that causes a computer to execute at least a part of the operations described in the above-described embodiment is used. For example, the control unit 110 may be implemented by a control program stored in the memory 1002 and operated in the processor 1001, and other functional blocks may be similarly implemented.

The memory 1002 is a computer-readable storage medium, and may include, for example, at least one of a read only memory (ROM), an erasable programmable ROM (EPROM), an electrically EPROM (EEPROM), a random access memory (RAM), or another appropriate storage medium. The memory 1002 may be referred to as a register, a cache, a main memory (main storage apparatus), or the like. The memory 1002 may store a program (a program code), a software module, and the like that can be executed to implement the method according to the embodiment.

The storage 1003 is a computer-readable storage medium, and may be configured with, for example, at least one of a flexible disk, a floppy (registered trademark) disk, a magneto-optical disk (for example, a compact disc (such as a compact disc ROM (CD-ROM)), a digital versatile disc, or a Blu-ray (registered trademark) disc), a removable disk, a hard disk drive, a smart card, a flash memory device (for example, a card, a stick, or a key drive), a magnetic stripe, a database, a server, or another appropriate storage medium. The storage 1003 may be referred to as an auxiliary storage apparatus. Note that the above-described storage unit 120 may be implemented by the memory 1002 and/or the storage 1003.

The communication apparatus 1004 is hardware (transmission/reception device) for performing communication between computers via at least one of a wired network and a wireless network, and is also referred to as, for example, a network device, a network controller, a network card, a communication module, or the like. The communication apparatus 1004 may include a SIM card. Note that the above-described communication unit 130 may be implemented by the communication apparatus 1004.

The input apparatus 1005 is an input device (for example, a keyboard, a mouse, and the like) that receives an input from the outside. The output apparatus 1006 is an output device (for example, a display, a speaker, and the like) that performs output to the outside. Note that the input apparatus 1005 and the output apparatus 1006 may be configured integrally (for example, a touch panel). Note that the input unit 140 and the output unit 150 described above may be implemented by the input apparatus 1005 and the output apparatus 1006, respectively.

In addition, the respective apparatuses such as the processor 1001 and the memory 1002 are connected to each other by a bus 1007 for communicating information. The bus 1007 may be configured with a single bus or may be configured with different buses between apparatuses.

In addition, the cost calculation apparatus 10, the broadcasting distribution apparatus 20, and the information processing apparatus (rating point prediction apparatus) 30 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of the above-described hardware.

### (Modification)

Note that the terms described in the present disclosure and/or terms necessary for understanding the present disclosure may be replaced with terms having the same or similar meanings.

The information, the parameter, and the like described in the present disclosure may be represented by using an absolute value, may be represented by using a relative value from a predetermined value, or may be represented by using another piece of corresponding information. In addition, names used for parameters and the like in the present disclosure are not limited in any respect.

The information, signals, and the like described in the present disclosure may be represented using any one of a variety of different technologies. For example, data, instructions, commands, information, signals, bits, symbols, chips, and the like that may be mentioned throughout the above description may be represented by voltages, currents, electromagnetic waves, magnetic fields or particles, optical fields or photons, or any combination thereof.

The information, the signals, and the like may be input and output via a plurality of network nodes. The input/output information, signals, and the like may be stored in a specific location (for example, a memory) or may be managed using a table. The input/output information, signals, and the like can be overwritten, updated, or added. The output information, signals, and the like may be deleted. The input information, signals, and the like may be transmitted to another apparatus.

Furthermore, notification of predetermined information (for example, notification of "being X") is not limited to explicit notification, and may be performed implicitly (for example, by not notifying the predetermined information or by notifying another piece of information).

Software, whether referred to as software, firmware, middleware, microcode, hardware description language, or other names, should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

Software, an instruction, information, and the like may be transmitted and received via at least one of a transmission medium and a signal waveform. For example, when software is transmitted from a website, a server, or other remote sources using at least one of a wired technology (a coaxial cable, an optical fiber cable, a twisted pair, a digital subscriber line (DSL), or the like) and a wireless technology (an infrared ray, a microwave, and the like), at least one of the wired and wireless technologies is included within the definition of the transmission medium.

The terms "system" and "network" used in the present disclosure may be used interchangeably.

Each aspect/embodiment described in the present disclosure may be used alone, may be used in combination, or may be switched in execution. In addition, the order of the processing procedure, sequence, flowchart, and the like of each aspect/embodiment described in the present disclosure may be changed as long as there is no contradiction. For example, for the methods described in the present disclosure, elements of various steps are presented using an exemplary order, and are not limited to the presented specific order.

As used in the present disclosure, the description "based on" does not mean "based only on" unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to the first and second elements do not imply that only two elements may be employed or that the first element must in any way precede the second element.

When the present disclosure uses the terms "include", "including", and variations thereof, such terms are intended to be inclusive in a manner similar to the term "comprising". Furthermore, the term "or" used in the present disclosure is intended not to be an exclusive OR.

In the present disclosure, for example, when articles such as a, an, and the in English are added by translation, the present disclosure may include a case in which a noun following such articles is a plural form.

Although the invention according to the present disclosure has been described in detail above, it is apparent to those skilled in the art that the invention according to the present disclosure is not limited to the embodiment described in the present disclosure. The invention according to the present disclosure can be implemented as modifications and variations without departing from the spirit and scope of the invention defined based on the description of the claims. Therefore, the description of the present disclosure is for the purpose of illustration and does not bring any restrictive meaning to the invention according to the present disclosure.

The present application is based on Japanese Patent Application No**.** 2022-112231 filed on July 13, 2022. All contents are included herein.

## Claims

1. An information processing apparatus comprising:
an acquisition unit configured to acquire past programs that are candidates for a related program to be used for rating point prediction of a target program; and
an extraction unit configured to extract the related program from among the past programs based on a broadcast station, a broadcast date and time, a program name, and a program content of the past program.

2. The information processing apparatus according to claim 1, further comprising:
a prediction unit configured to predict a rating point of the target program by using the related program.

3. The information processing apparatus according to claim 1 or 2, wherein
the extraction unit extracts the related program from among the past programs based on whether or not a broadcast station of the target program and the broadcast station of the past program are same.

4. The information processing apparatus according to claim 1 or 2, wherein
the extraction unit extracts the related program from among the past programs based on whether or not there is a predetermined common matter between broadcast dates of the target program and the past program, and whether or not start times, end times, and broadcast duration of the target program and the past program are same or within a predetermined range.

5. The information processing apparatus according to claim 1 or 2, wherein
the extraction unit extracts the related program from among the past programs based on whether or not an editing amount for making the program names of the target program and the past program into a same character string exceeds a predetermined editing amount.

6. The information processing apparatus according to claim 1 or 2, wherein
the extraction unit vectorizes the program names, program summaries, and program details of the target program and the past program by using bidirectional encoder representations from transformers (BERT), and extracts the related program from among the past programs based on cosine similarity between the vectorized target program and the past program.

7. An information processing method comprising:
a step of acquiring past programs that are candidates for a related program to be used for rating point prediction of a target program; and
a step of extracting the related program from among the past programs based on a broadcast station, a broadcast date and time, a program name, and a program content of the past program.

8. An information processing program causing a computer to execute:
a step of acquiring past programs that are candidates for a related program to be used for rating point prediction of a target program; and
a step of extracting the related program from among the past programs based on a broadcast station, a broadcast date and time, a program name, and a program content of the past program.
